# EUROPÄISCHE PATENTSCHRIFT

(11) **EP 3 098 186 B1**
(45) Veröffentlichungstag und Bekanntmachung des Hinweises auf die Patenterteilung: **06.12.2017**
(21) Anmeldenummer: 16154772.4
(22) Anmeldetag: 09.02.2016
(51) Int. Cl.: B65G 39/18, B65G 15/10, B29D 30/48, B29D 30/00

(54) **VORRICHTUNG ZUM TRANSPORT EINER STEHEND AUSGERICHTETEN MATERIALBAHN**
DEVICE FOR TRANSPORTING A VERTICALLY ALIGNED SHEET OF MATERIAL
DISPOSITIF DE TRANSPORT D'UNE BANDE DE MATERIAU DEBOUT

(30) Priorität: 29.05.2015 DE 102015209876
(43) Veröffentlichungstag der Anmeldung: 30.11.2016
(73) Patentinhaber: Continental Reifen Deutschland GmbH, 30165 Hannover (DE)
(72) Erfinder: Koch, Tim, 30171 Hannover (DE); Berger, Markus, 31319 Sehnde (DE); Vlcek, Pavel, 76001 Zlin (CZ); Jurena, Lukas, 76363 Halenkovice (CZ); Wegner, Denis, 30419 Hannover (DE)
(74) Vertreter: Widjaja, Wira

(56) Entgegenhaltungen:
- EP-A2- 0 345 633
- WO-A1-00/23262
- WO-A1-2014/092558
- DE-A1- 10 206 515
- DE-T2- 3 873 869
- US-A- 3 844 398
- US-A- 5 486 261

## Beschreibung

Die Erfindung betrifft eine Vorrichtung zum Transport einer stehend ausgerichteten Materialbahn aus einer Kautschukmischung.

Es ist bekannt und üblich, im Zuge der Reifenfertigung Kernpakete (Fertigkerne) bestehend aus Wulstkern und Apex (Kernreiter) bereitzustellen. Zum Applizieren von Apexen mit einer Höhe größer oder gleich 65 mm auf einem Wulstkern wird der Apex zuerst auf eine Applikationstrommel aufgewickelt. Von dieser wird der Apex anschließend auf dem Wulsterkern appliziert.

Apexe werden aus Materialbahnen hergestellt, welche mittels eines Apexzubringers einer Schnitteinrichtung zugeführt werden. Bei den bisher bekannten Apexzubringern wird dabei die Materialbahn, beispielsweise mittels einer Förderrolle oder eines Pick- und Place-Systems, in flachliegender Ausrichtung gefördert.

Mit den bisher bekannten Anlagen können Apexe nicht in stehender Ausrichtung gefördert werden, sodass es derzeit nicht möglich ist, Apexe auf Applikationstrommeln, deren Drehachse in vertikaler Richtung ausgerichtet ist, aufzuwickeln. Derart orientierte Applikationstrommeln sind beispielsweise bei Anlagen zur Kernpaketfertigung erforderlich, die horizontal ausgerichtete Rundtakttische verwenden.

Die DE 38 73 869 T1 und WO 00/23262 A1 offenbaren bekannte Vorrichtungen zum Bearbeiten von Apexen für Fahrzeugreifen. Aus der DE 102 06 515 A1 ist eine Vorrichtung geeignet zum Transport einer stehend ausgerichteten Materialbahn aus einer Kautschukmischung mit einer Fördereinrichtung und einer Führungseinrichtung, zwischen welchen die Materialbahn gefördert wird, wobei die Fördereinrichtung eine vertikal ausgerichtete, in eine umlaufende Bewegung versetzbare Fördervorrichtung und die Führungseinrichtung eine am unteren Bereich des Förderbandes befindliche Führungsleiste, auf welcher die Materialbahn während ihres Transportes aufsteht, aufweist, und wobei oberhalb der Führungsleiste eine Andrückvorrichtung angeordnet ist, an deren dem Fördervorrichtung zugewandten Seite frei drehbar und elastisch federnd gelagerte Führungsrollen angeordnet sind bekannt. Der Erfindung liegt daher die Aufgabe zugrunde, eine alternative Vorrichtung bereitzustellen, die eine Förderung einer stehend ausgerichteten Materialbahn aus einer Kautschukmischung, insbesondere einer Apexmaterialbahn, gestattet. Gelöst wird die gestellte Aufgabe erfindungsgemäß durch eine Vorrichtung mit einer Fördereinrichtung und einer Führungseinrichtung, zwischen welchen die Materialbahn gefördert wird, wobei die Fördereinrichtung ein vertikal ausgerichtetes, in eine umlaufende Bewegung versetzbares Förderband und die Führungseinrichtung eine am unteren Bereich des Förderbandes befindliche Führungsleiste, auf welcher die Materialbahn während ihres Transportes aufsteht, aufweist, und wobei oberhalb der Führungsleiste eine im Wesentlichen parallel zum Förderband ausgerichtete Andrückplatte angeordnet ist, an deren dem Förderband zugewandten Seite frei drehbar und elastisch federnd gelagerte Führungsrollen angeordnet sind.

Durch die Kombination eines vertikal ausgerichteten Förderbandes mit einer parallel zu diesem ausgerichteten Andrückplatte kann die Materialbahn während ihres Transportes aufrecht gehalten werden. Neben seiner Funktion als Antriebselement hat das Förderband auch die Funktion, die Materialbahn an ihrer einen Seite zu führen. Die Führung an der anderen Seite wird von den elastisch federnd gelagerten Führungsrollen der Andrückplatte übernommen. Diese ermöglichen eine örtliche Anpassung der Andruckkraft der Andrückplatte an die jeweilige Aussenkontur der zu transportierenden Materialbahn. In vertikaler Richtung erfolgt die Führung der Materialbahn durch die Führungsleiste. Dadurch ist zum Einem sichergestellt, dass die Materialbahn die für den Transport erforderliche Traktion zum Förderband aufweist und die Materialbahn unbeschädigt transportiert wird.

Bei einer bevorzugten Ausführungsform der Erfindung sind die an der Andrückplatte angeordneten Führungsrollen an unter Vorspannung stehenden Federn gelagert, welche die Führungsrollen von der Andrückplatte wegdrücken. Die unter Vorspannung stehenden Federn bewirken ein besonders effektives Andrücken der an ihnen gelagerten Führungsrollen an die Materialbahn.

Bei Materialbahnen mit einem nach oben spitz zusammenlaufenden Querschnitt kann keine obere Führung für die Materialbahn vorgesehen werden, welche ein etwaiges in vertikaler Richtung erfolgendes Nachobenwandern der Materialbahn verhindern würde. Es ist daher von Vorteil, wenn die Orientierung der Drehachsen der Führungsrollen in einer Ebene parallel zur Andrückplatte veränderbar ist, sodass die Führungsrollen eine Förderwirkung in Richtung der unteren Führungsleiste ausüben können.

Bei einer bevorzugten Ausführungsform der Erfindung sind die Führungsrollen auf an der Andrückplatte angeordneten Leisten gelagert. Dies ermöglicht ein einfaches Tauschen der elastisch gelagerten Führungsrollen. Für eine optimale Führung der Materialbahn ist es ferner vorteilhaft, wenn an jeder Leiste zwei bis fünf Führungsrollen vorgesehen.

Um einen optimalen Transport von Materialbahnen verschiedenen Dicken zu ermöglichen ist bei einer weiteren bevorzugten Ausführungsform der Erfindung der Abstand der Andrückplatte zum Förderband mittels einer Feineinstelleinrichtung einstellbar.

Weitere erfindungsgemäße Maßnahmen tragen dazu bei, einen ungehinderten Transport der Materialbahn zu unterstützen. In diesem Zusammenhang ist es von Vorteil, wenn die Führungsleiste eine Vielzahl von frei drehbar gelagerten Führungsrollen aufweist, auf welchen die Materialbahn während ihres Transports aufsteht. Es ist ferner von Vorteil, wenn die Neigung der Führungsleiste und damit die Neigung der Führungsrollen relativ zum Förderband verstellbar sind. Die einstellbare Ausrichtung der Führungsleiste gestattet eine weitere Anpassung der Vorrichtung an die Beschaffenheit, die Abmessungen und die Form der jeweiligen Materialbahn.

Eine einfache Erstpositionierung der Materialbahn ist dadurch möglich, dass die Führungseinrichtung im Wesentlichen parallel zueinander sowie im Wesentlichen orthogonal zur Förderrichtung der Materialbahn verlaufende Schienen aufweist. Auf diesen Schienen kann die Führungseinrichtung besonders schnell von der Fördereinrichtung weg und zu dieser hin bewegt werden.

Zur Verbesserung der vom Förderband auf die Materialbahn übertragenen Antriebskraft ist es von Vorteil, weitere erfindungsgemäße Maßnahmen vorzusehen. Bei einer dieser Maßnahmen ist das Förderband perforiert und es ist von der Förderbandinnenseite ein Unterdruck erzeugbar. Besonders vorteilhaft ist es, wenn das Förderband mit einer reibungserhöhenden Beschichtung versehen ist. Durch diese Maßnahmen können die Beschleunigungs- bzw. Verzögerungswerte erhöht werden, wodurch geringere Zykluszeiten erreicht und somit die Produktivität gesteigert werden.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine schematische Darstellung eines Apexzubringers gemäß einer Ausführungsform der Erfindung,
Fig. 2 eine Ansicht auf die Rückseite einer Andrückplatte einer Führungseinrichtung des Apexzubringers und
Fig. 3 eine Seitenansicht des Apexzubringers aus Fig. 1.

Die in der nachfolgenden Beschreibung verwendeten Begriffe wie "senkrecht", "waagrecht" und dergleichen beziehen sich jeweils auf die Darstellungen der betreffenden Bauteile in den Figuren.

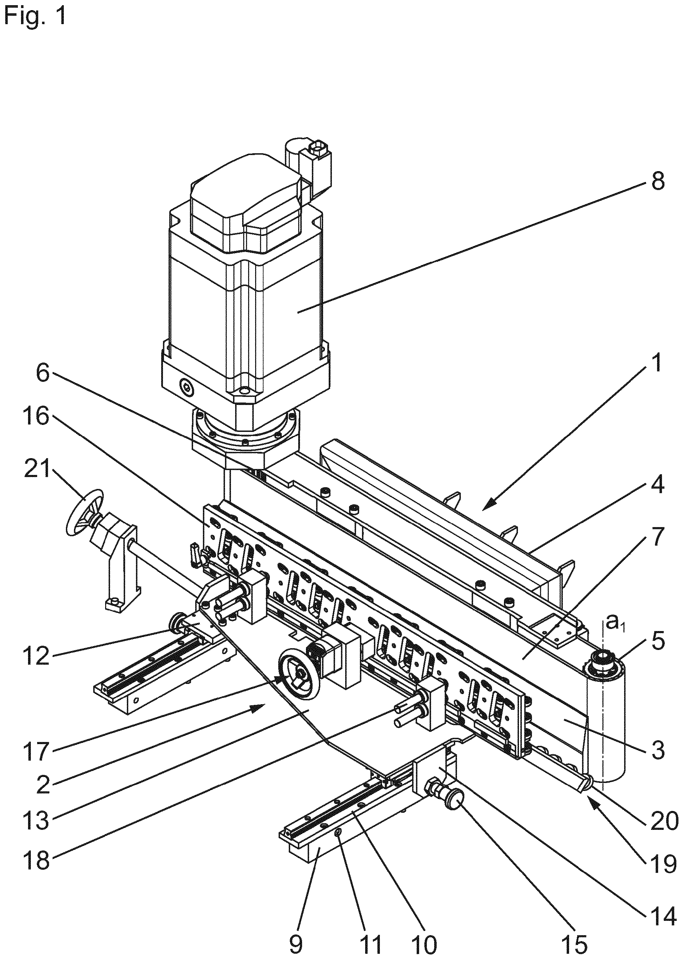

In Fig. 1 sind ein Apexzubringer, bestehend aus einer Fördereinrichtung 1 und einer der Fördereinrichtung 1 gegenüberliegend angeordneten Führungseinrichtung 2, sowie ein zwischen der Fördereinrichtung 1 und der Führungseinrichtung 2 positionierter Längsabschnitt einer Materialbahn 3 dargestellt.

Die Materialbahn 3 wird insbesondere durch Extrusion aus einer Kautschukmischung hergestellt und weist einen für einen Apex (Kernprofil) üblichen Querschnitt auf. Mittels des Apexzubringers wird die Materialbahn 3 stehend zu einer Schneideinrichtung weitertransportiert. An der Schneideinrichtung wird die Materialbahn 3 auf die jeweils erforderliche Länge zugeschnitten und anschließend zur Fertigung eines Apexes verwendet. Die in Fig. 1 gezeigte erfindungsgemäße Vorrichtung kann jedoch grundsätzlich auch zum stehenden Transport anderer streifenförmiger Materialien bzw. Materialbahnen in der Fahrzeugluftreifenfertigung eingesetzt werden.

Die Fördereinrichtung 1 ist an einer Halterung 4 befestigt und weist eine Umlenktrommel 5, eine Antriebstrommel 6, ein um die Umlenktrommel 5 und die Antriebstrommel 6 umlaufendes Förderband 7 sowie einen Antriebsmotor 8 auf. Die Umlenktrommel 5 und die Antriebstrommel 6 sind derart orientiert, dass ihre jeweilige Drehachse a₁ im Wesentlichen in vertikaler Richtung verläuft. Dementsprechend ist das Förderband 7 vertikal ausgerichtet. Mittels des Antriebsmotors 8, welcher beispielsweise ein Servomotor ist, ist die Antriebstrommel 6 in eine um ihre Drehachse a₁ verlaufende Rotationsbewegung versetzbar, sodass das Förderband 7 eine um die Umlenktrommel 5 und die Antriebstrommel 6 umlaufende Bewegung ausführt.

Die Führungseinrichtung 2 weist zwei jeweils auf einer Schienenhalterung 9 angeordnete Schienen 10 auf, welche im Wesentlichen parallel zueinander sowie im Wesentlichen waagrecht und orthogonal zur Fördereinrichtung 1 ausgerichtet sind. Die Schienenhalterungen 9 sind jeweils am nicht dargestellten Untergrund befestigt und besitzen je zwei im Wesentlichen quer zu ihrer Erstreckungsrichtung verlaufende Bohrungen 11.

Auf jeder Schiene 10 ist ein auf ihr verschiebbar gelagerter Führungswagen 12 positioniert. Auf den beiden Führungswägen 12 ist eine Basisplatte 13 befestigt, an welcher im Bereich zumindest einer der Schienen 10 ein in Richtung Untergrund ausgerichtetes Halterungselement 14 befestigt ist. Das Halterungselement 14 weist selbst ebenfalls eine Bohrung auf, durch welche ein Befestigungselement 15, beispielsweise ein Bolzen, eine Schraube oder dergleichen, in einer der Bohrungen 11 fixierbar ist. Wird das Befestigungselement 15 aus der entsprechenden Bohrung 11 entfernt, kann die Führungseinrichtung 2 auf ihren Schienen 10 zur Fördereinrichtung 1 hin bzw. von dieser wegbewegt werden.

Die Führungseinrichtung 2 weist ferner eine im Wesentlichen parallel zum Förderband 7 ausgerichtete Andrückplatte 16 auf, welche in ihrem mittleren Bereich an einer Feineinstelleinrichtung 17 und seitlich von zumindest je einer, vorzugsweise von zwei, Linearführung(en) 18 gehalten wird. Die Feineinstelleinrichtung 17 und die Linearführungen 18 sind an der Basisplatte 13 befestigt. Die Linearführungen 18 dienen insbesondere als Halteelemente der Andrückplatte 16 gegenüber der Basisplatte 13. Mittels der Feineinstelleinrichtung 17 ist der Abstand der Andrückplatte 16 zum Förderband 7 einstellbar, wobei beim Verstellen die beiden Linearführungen 18 entsprechend der Bewegung der Andrückplatte 16 mitgeführt werden. Im Betrieb befindet sich die Führungseinrichtung 2, wie in Fig. 1 gezeigt, in einem geringen Abstand zur Fördereinrichtung 1.

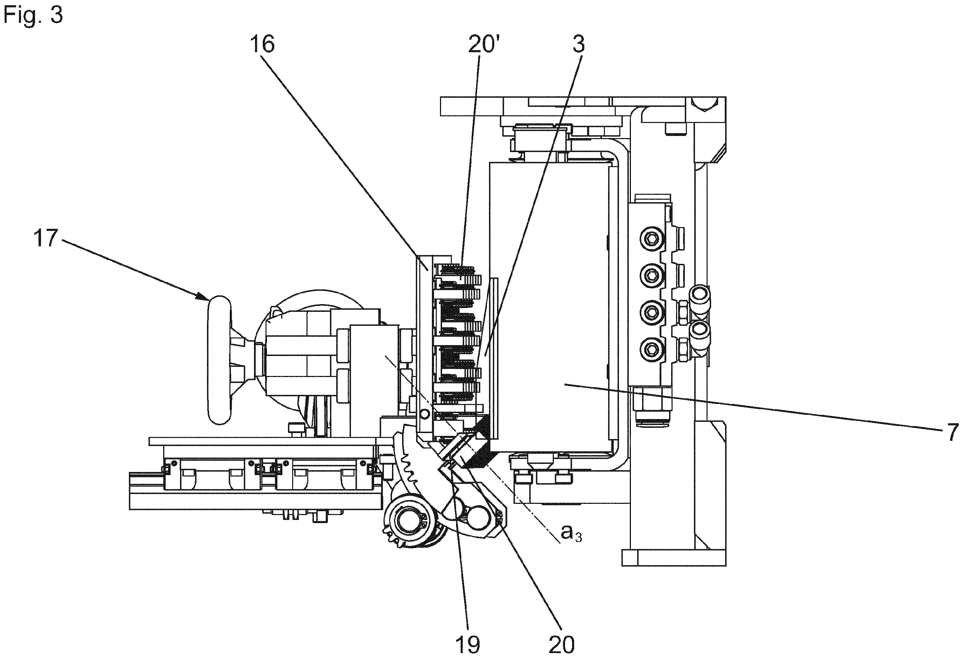

Entlang der unteren Kante der Andrückplatte 16 weist die Führungseinrichtung 2 eine Führungsleiste 19 mit einer Vielzahl von drehbar gelagerten Führungsrollen 20 auf, auf welchen im Betrieb des Apexzubringers die Materialbahn 3 aufsteht. Die Neigung der Führungsleiste 19 und damit die Neigung der Führungsrollen 20 sind mittels einer Verstelleinrichtung 21 einstellbar und an die Aufstandsfläche der Materialbahn 3 anpassbar. Je nach Beschaffenheit, Abmessungen und Form der zwischen der Fördereinrichtung 1 und der Führungseinrichtung 2 zu transportierenden Materialbahn 3 können für die optimale Beförderung der Materialbahn 3 unterschiedliche Ausrichtungen der Führungsleiste 19 und damit auch der Drehachsen a₃ der Führungsrollen 20 (Fig. 3) eingestellt werden.

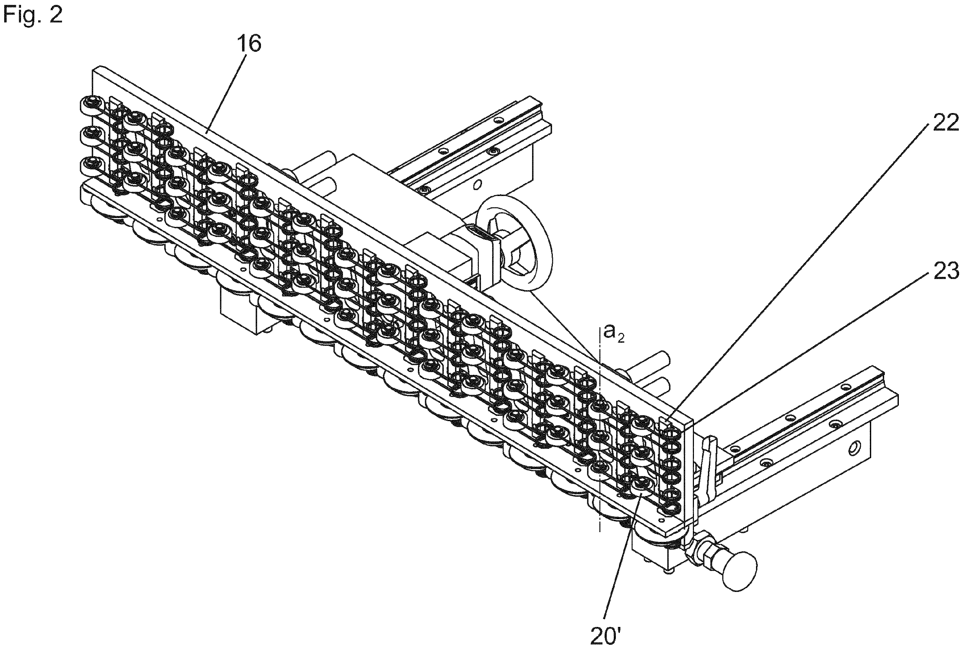

Eine Vielzahl weiterer Führungsrollen 20' ist an der der Fördereinrichtung 1 zugewandten Seite der Andrückplatte 16 angeordnet (Fig. 2). Gemäß Fig. 2 sind die Führungsrollen 20' an der Andrückplatte 16 an mehreren im Wesentlichen in vertikaler Richtung orientierten und parallel zueinander verlaufenden Leisten 22, welche an der Andrückplatte 16 befestigt sind, angeordnet. Die Anzahl der Leisten 22 beträgt vorzugsweise zehn bis zwanzig. Jede Führungsrolle 20' ist an zwei unter Vorspannung stehenden übereinander angeordneten Schenkelfedern 23 frei drehbar gelagert und mittels dieser beiden Schenkelfedern 23 an einer der Leisten 22 aufgehängt. Dabei sind die Führungsrollen 20' derart orientiert, dass ihre Drehachsen a₂ im Wesentlichen in vertikaler Richtung verlaufen. An jeder Leiste 22 sind vorzugsweise mindestens zwei und insbesondere bis zu fünf Führungsrollen 20' vorgesehen, wobei im gezeigten Ausführungsbeispiel je drei Führungsrollen 20' an jeder Leiste 22 angeordnet sind. Zueinander benachbarte Leisten 22 sind in vertikaler Richtung vorzugsweise geringfügig gegeneinander versetzt.

Im unbelasteten Zustand der Schenkelfedern 23 bewirkt deren Vorspannung ein entsprechendes Abstehen der jeweiligen Führungsrolle 20' von der Andrückplatte 16, sodass mittels der Führungsrollen 20' die Materialbahn 3 gegen das Förderband 7 gedrückt wird, wie in Fig. 3 lediglich angedeutet ist.

Bei einer bevorzugten Ausführungsform der Erfindung sind die Leisten 22 derart an der Andrückplatte 16 verstellbar angeordnet, dass die Orientierung der Drehachsen a₂ der an den Leisten 22 gelagerten Führungsrollen 20' veränderbar ist, sodass die Drehachsen a₂ in einer Ebene parallel zur Andrückplatte 16 gegenüber der Vertikalen geneigt werden können. Durch die Neigung der Drehachsen a₂ der Führungsrollen 20' kann die Materialbahn 3 zusätzlich leicht gegen die Führungsleiste 19 gedrückt werden, wodurch ein etwaiges Nachobenwandern der Materialbahn 3 in vertikaler Richtung verhindert wird. Gerade bei Apex-Materialbahnen ist es nicht möglich, eine obere Führung vorzusehen, da diese einen spitz zusammenlaufenden Querschnitt aufweisen.

Wie in Fig. 2 angedeutet, kann mittels der Feineinstelleinrichtung 17 der Abstand zwischen der Andrückplatte 16 und der Materialbahn 3 derart eingestellt werden, dass mittels der Schenkelfedern 23 die Rollen 20' der Andrückplatte 16 die Materialbahn 3 an das Förderband 7 der Fördereinrichtung 1 optimal andrücken. Die an der Andrückplatte 16 einzeln gefedert gelagerten Rollen 20' ermöglichen eine flexible örtliche Anpassung der Andrückkraft an unterschiedliche Profile der Materialbahn 3. Dies ist insbesondere bei Materialbahnen zur Apexfertigung von großem Vorteil, da keine Beschädigungen der Materialbahn 3 beim Transport auftreten und gleichzeitig eine ausreichend hohe Traktion zwischen dem Förderband 7 und der Materialbahn 3 für deren stehenden Transport vorhanden ist. Bei einer weiteren vorteilhaften Ausführungsform der Erfindung ist die Andrückkraft der einzelnen Rollen 20' einstellbar.

Bei einer weiteren alternativen Ausführungsform ist das Förderband 7 mit einer Beschichtung überzogen, welche den Reibungskoeffizienten des Förderbandes 7 erhöht.

Bei einer anderen alternativen Ausführungsform weist das Förderband 7 eine Perforierung auf und es wird an der Förderbandinnenseite ein Unterdruck erzeugt. Sowohl durch die Beschichtung als auch durch den Unterdruck kann die vom Förderband 7 auf die Materialbahn 3 übertragene Antriebskraft weiter erhöht werden, sodass höhere Beschleunigungs- bzw. Verzögerungswerte und somit geringere Zykluszeiten erreicht werden.

### Bezugsziffernliste

1.......................Fördereinrichtung
2.......................Führungseinrichtung
3.......................Materialbahn
4.......................Halterung
5.......................Umlenktrommel
6.......................Antriebstrommel
7.......................Förderband
8.......................Antriebsmotor
9.......................Schienenhalterung
10.....................Schiene
11.....................Bohrung
12.....................Führungswagen
13.....................Basisplatte
14.....................Halterungselement
15.....................Befestigungselement
16.....................Andrückplatte
17.....................Feineinstelleinrichtung
18.....................Linearführung
19.....................Führungsleiste
20, 20'..............Führungsrolle
21..................... Verstelleinrichtung
22.....................Leiste
23.....................Schenkelfeder
a₁, a₂, a₃............Drehachse

## Patentansprüche

1. Vorrichtung zum Transport einer stehend ausgerichteten Materialbahn (3) aus einer Kautschukmischung mit einer Fördereinrichtung (1) und einer Führungseinrichtung (2), zwischen welchen die Materialbahn (3) gefördert wird, wobei die Fördereinrichtung (1) ein vertikal ausgerichtetes, in eine umlaufende Bewegung versetzbares Förderband (7) und die Führungseinrichtung (2) eine am unteren Bereich des Förderbandes (7) befindliche Führungsleiste (19), auf welcher die Materialbahn (3) während ihres Transportes aufsteht, aufweist, und wobei oberhalb der Führungsleiste (19) eine parallel zum Förderband (7) ausgerichtete Andrückplatte (16) angeordnet ist, an deren dem Förderband (7) zugewandten Seite frei drehbar und elastisch federnd gelagerte Führungsrollen (20') angeordnet sind.

2. Vorrichtung nach Anspruch 1, **dadurch gekennzeichnet, dass** die an der Andrückplatte (16) angeordneten Führungsrollen (20') an unter Vorspannung stehenden Federn (23) gelagert sind, welche die Führungsrollen (20') von der Andrückplatte (16) wegdrücken.

3. Vorrichtung nach Anspruch 1 oder 2, **dadurch gekennzeichnet, dass** die Orientierung der Drehachsen (a₂) der Führungsrollen (20') in einer Ebene parallel zur Andrückplatte (16) veränderbar ist, sodass die Führungsrollen (20') eine Förderwirkung in Richtung der Führungsleiste (19) ausüben.

4. Vorrichtung nach einem der Ansprüche 1 bis 3, **dadurch gekennzeichnet, dass** die Führungsrollen (20') auf an der Andrückplatte (16) angeordneten Leisten (22) gelagert sind.

5. Vorrichtung nach einem der Anspruch 4, **dadurch gekennzeichnet, dass** an jeder Leiste (22) zwei bis fünf Führungsrollen (20') vorgesehen sind.

6. Vorrichtung nach einem der Ansprüche 1 bis 5, **dadurch gekennzeichnet, dass** der Abstand der Andrückplatte (16) zum Förderband (7) mittels einer Feineinstelleinrichtung (17) einstellbar ist.

7. Vorrichtung nach einem der Ansprüche 1 bis 6, **dadurch gekennzeichnet, dass** die Führungsleiste (19) eine Vielzahl von frei drehbar gelagerten Führungsrollen (20) aufweist.

8. Vorrichtung nach einem der Ansprüche 1 bis 7, **dadurch gekennzeichnet, dass** die Neigung der Führungsleiste (19) und damit die Neigung der Führungsrollen (20) relativ zum Förderband (7) verstellbar ist.

9. Vorrichtung nach einem der Ansprüche 1 bis 8, **dadurch gekennzeichnet, dass** die Führungseinrichtung (2) im Wesentlichen parallel zueinander sowie im Wesentlichen orthogonal zur Förderrichtung der Materialbahn (3) verlaufende Schienen (10) aufweist.

10. Vorrichtung nach einem der Ansprüche 1 bis 9, **dadurch gekennzeichnet, dass** das Förderband (7) perforiert ist und von der Förderbandinnenseite ein Unterdruck erzeugbar ist.

11. Vorrichtung nach einem der Ansprüche 1 bis 10, **dadurch gekennzeichnet, dass** das Förderband (7) mit einer reibungserhöhenden Beschichtung versehen ist.

## Claims

1. Device for transporting a vertically aligned sheet of material (3) of a rubber mixture, comprising a conveying device (1) and a guiding device (2), between which the sheet of material (3) is conveyed, wherein the conveying device (1) has a vertically aligned conveyor belt (7), which can be set in a circulating motion, and the guiding device (2) has a guide bar (19), which is located at the lower region of the conveyor belt (7) and on which the sheet of material (3) stands while it is being transported, and wherein a pressing plate (16), which is aligned parallel to the conveyor belt (7) and on the side of which that is facing the conveyor belt (7) freely rotatably and resiliently spring-mounted guide rollers (20') are arranged, is arranged above the guide bar (19).

2. Device according to Claim 1, **characterized in that** the guide rollers (20') arranged on the pressing plate (16) are mounted on pretensioned springs (23), which press the guide rollers (20') away from the pressing plate (16).

3. Device according to Claim 1 or 2, **characterized in that** the orientation of the axes of rotation (a₂) of the guide rollers (20') is variable in a plane parallel to the pressing plate (16), so that the guide rollers (20') exert a conveying action in the direction of the guide bar (19).

4. Device according to one of Claims 1 to 3, **characterized in that** the guide rollers (20') are mounted on bars (22) arranged on the pressing plate (16).

5. Device according to one of Claim 4, **characterized in that** two to five guide rollers (20') are arranged on each bar (22).

6. Device according to one of Claims 1 to 5, **characterized in that** the distance of the pressing plate (16) from the conveyor belt (7) can be set by means of a precision setting device (17).

7. Device according to one of Claims 1 to 6, **characterized in that** the guide bar (19) has a multiplicity of freely rotatably mounted guide rollers (20).

8. Device according to one of Claims 1 to 7, **characterized in that** the inclination of the guide bar (19), and consequently the inclination of the guide rollers (20), in relation to the conveyor belt (7) is adjustable.

9. Device according to one of Claims 1 to 8, **characterized in that** the guiding device (2) has rails (10) running substantially parallel to one another and substantially orthogonal to the conveying direction of the sheet of material (3).

10. Device according to one of Claims 1 to 9, **characterized in that** the conveyor belt (7) is perforated and a negative pressure can be generated from the inner side of the conveyor belt.

11. Device according to one of Claims 1 to 10, **characterized in that** the conveyor belt (7) is provided with a friction-increasing coating.

## Revendications

1. Dispositif pour le transport d'une bande de matière (3) en un mélange de caoutchouc, disposée à la verticale, à l'aide d'un dispositif de transport (1) et d'un dispositif de guidage (2) entre lesquels la bande de matière (3) est transportée,
le dispositif de transport (1) présentant une bande transporteuse (7) orientée à la verticale et pouvant être déplacée selon un mouvement en boucle fermée, et le dispositif de guidage (2) présentant une latte de guidage (19) située dans la partie inférieure de la bande transporteuse (7) sur laquelle la bande de matière (3) est posée pendant son transport, et une plaque de poussée (16) orientée en parallèle à la bande transporteuse (7), sur le côté tourné vers la bande transporteuse (7) de laquelle sont disposés des rouleaux de guidage (20') à rotation libre et montés de manière élastique avec ressort étant disposée au-dessus de la latte de guidage (19).

2. Dispositif selon la revendication 1, **caractérisé en ce que** les rouleaux de guidage (20') disposés sur la plaque de poussée (16) sont montés sur des ressorts (23) précontraints qui éloignent les rouleaux de guidage (20') de la plaque de poussée (16).

3. Dispositif selon la revendication 1 ou 2, **caractérisé en ce que** l'orientation des axes de rotation (a2) des rouleaux de guidage (20') dans un plan parallèle à la plaque de poussée (16) peut être modifiée de telle sorte que les rouleaux de guidage (20') exercent un effet de transport en direction de la latte de guidage (19).

4. Dispositif selon l'une des revendications 1 à 3, **caractérisé en ce que** les rouleaux de guidage (20') sont montés sur des lattes (22) disposées sur la plaque de poussée (16).

5. Dispositif selon l'une quelconque de la revendication 4, **caractérisé en ce que** deux à cinq rouleaux de guidage (20') sont prévus sur chaque latte (22).

6. Dispositif selon l'une des revendications 1 à 5, **caractérisé en ce que** la distance entre la plaque de poussée (16) et la bande transporteuse (7) peut être ajustée au moyen d'un dispositif (17) de réglage fin.

7. Dispositif selon l'une des revendications 1 à 6, **caractérisé en ce que** la latte de guidage (19) présente plusieurs rouleaux de guidage (20) montés à rotation libre.

8. Dispositif selon l'une des revendications 1 à 7, **caractérisé en ce que** l'inclinaison de la latte de guidage (19) et donc l'inclinaison des rouleaux de guidage (20) par rapport à la bande transporteuse (7) peut être ajustée.

9. Dispositif selon l'une des revendications 1 à 8, **caractérisé en ce que** le dispositif de guidage (2) présente des rails (10) essentiellement parallèles les uns aux autres ainsi qu'essentiellement perpendiculaires à la direction de transport de la bande de matière (3).

10. Dispositif selon l'une des revendications 1 à 9, **caractérisé en ce que** la bande transporteuse (7) est perforée et **en ce qu'**une dépression peut être formée sur le côté intérieur de la bande transporteuse.

11. Dispositif selon l'une des revendications 1 à 10, **caractérisé en ce que** la bande transporteuse (7) est dotée d'un revêtement qui augmente le frottement.
